# Europäisches Patentamt

## European Patent Office

## Office européen des brevets

(11) Veröffentlichungsnummer: **0 202 352**

**A1**

(12)

# EUROPÄISCHE PATENTANMELDUNG

(21) Anmeldenummer: **85106247.1**

(22) Anmeldetag: **22.05.85**

(51) Int. Cl.⁴: **H 05 H 1/26**
//C04B35/54

(43) Veröffentlichungstag der Anmeldung:
**26.11.86** Patentblatt **86/48**

(84) Benannte Vertragsstaaten:
**AT BE CH DE FR GB IT LI LU NL SE**

(71) Anmelder: **C. CONRADTY NÜRNBERG GmbH & Co. KG**
**Grünthal 1-6**
**D-8505 Röthenbach a.d. Pegnitz(DE)**

(72) Erfinder: **Wilhelmi, Herbert, Prof. Dr.-Ing.**
**Richtericher Strasse 36**
**D-5100 Aachen-Richterich(DE)**

(72) Erfinder: **Kegel, Kurt, Prof., Dr.-Ing.**
**Hellweg 18**
**D-4300 Essen 14(DE)**

(72) Erfinder: **Zöllner, Dieter, Dr. rer. nat., Dipl.-Chem.**
**Händelstrasse 19**
**D-8501 Schwaig/b. Nürnberg(DE)**

(72) Erfinder: **Lauterbach-Dammler, Inge, Dr., Dipl.-Chem.**
**Peter-Vischer-Strasse 15**
**D-8500 Nürnberg 1(DE)**

(72) Erfinder: **Taube, Thomas, Dr., Dipl.-Chem.**
**Am Wolfsgarten 11**
**D-8520 Erlangen-Steudach(DE)**

(72) Erfinder: **Rittman, Friedrich, Obering.**
**Am Buck 18**
**D-8501 Rückersdorf/b. Nürnberg(DE)**

(74) Vertreter: **Eitle, Werner, Dipl.-Ing. et al,**
**Hoffmann, Eitle & Partner Patentanwälte Arabellastrasse 4**
**D-8000 München 81(DE)**

(54) **Plasmabrenner.**

(57) Ein Plasmabrenner weist einen Elektrodenhalter auf, der eine rohrförmige Außenelektrode (30) und eine koaxial angeordnete Zentralelektrode (31) trägt sowie eine elektrische Stromversorgungsquelle, die über Stromzuführungen jeweils mit der Außen- und Zentralelektrode verbindbar ist. Auch ist eine Einrichtung (14) zur Zuführung von Gas in den Bereich der Elektroden vorgesehen, zwischen denen zur Plasmabildung ein Lichtbogen erzeugt wird. Die rohrförmige Außenelektrode (30) weist einen ersten, aus elektrisch leitendem Metall bestehenden gekühlten, lichtbogeninaktiven Rohrabschnitt (37, 38) sowie daran anschließend einen zweiten lichtbogenaktiven ungekühlten Rohrabschnitt (40) auf, der aus temperaturbeständigem und elektrisch leitendem Material besteht und der lösbar mit dem ersten Rohrabschnitt verbunden ist. Der Lichtbogen verläuft zwischen dem zweiten Rohrabschnitt (40) und dem benachbarten lichtbogenaktiven Abschnitt (34) der koaxialen Zentralelektrode.

./...

FIG.4

Plasmabrenner

Die Erfindung betrifft einen Plasmabrenner mit einem Elektrodenhalter, der eine rohrförmige Außenelektrode und eine koaxial angeordnete Zentralelektrode trägt, mit einer elektrischen Versorgungsstromquelle, die über Stromzuführungen jeweils mit der Außenelektorde und mit der Zentralelektrode verbindbar ist, und mit einer Einrichtung zur Zuführung von Gas in den Bereich der Elektroden, zwischen denen zur Plasmabildung ein Lichtbogen erzeugt wird.

Aus der EP-B1-00 20 845 ist ein solcher Plasmabrenner bekannt, bei dem die rohrförmige Außenelektrode sowie die koaxiale Zentralelektrode aus graphitischem Werkstoff hergestellt sind. Die Dimensionen beider Elektroden sind derart, daß der Abstand zwischen dem stabförmigen Innenelektrodenteil und der Innenwand der rohrförmigen Außenelektrode klein ist gegenüber deren Gesamtlänge. Das graphitische Elektrodenmaterial sowie die Elektrodendimensionen sind hierbei so gewählt, daß eine ununterbrochene und gleichförmige Geschwindigkeit des axialen Verbrauches der Elektroden über ihre Länge erzielt wird. Hierbei werden ihre Form und Arbeitsbedingungen aufrechterhalten. Bei entsprechend lang ausgebildeten Elektroden des bekannten Plasmabrenners können deren freien Enden in eine Metallschmelze eingetaucht werden, wobei dann der Gasdruck zur Plasmabildung entsprechend hoch sein muß, damit das Plasma in Abhängigkeit von der Eintauchtiefe nach außen gelangen kann. Dies bedeutet, daß der Gasdruck zumindest gleich dem hydrostatischen Druck der jeweiligen Schmelze sein muß. Der Plasmabrenner ist derartig ausgestaltet, daß er ohne Kühlmedium im Brenner auskommt.

Nachteilig ist der Umstand, daß sowohl die Zentralelektrode als auch die rohrförmige Außenelektrode durch einen Antriebsmechanismus relativ zueinander nachgestellt werden müssen, da aufgrund des Lichtbogens in dessen Bereich zwischen Anode und Kathode ein Materialverzehr erfolgt. Des weiteren ist es nachteilig, daß insbesondere bei Verwendung von graphitischen Werkstoffen und entsprechend langer Ausbildung der Außen- und Innenelektrode insbesondere bei den beim Betrieb gegebenen Temperaturwerten aufgrund der Erhöhung des Leitungswiderstandes eine entsprechend hohe elektrische Verlustleistung auftritt.

Aus "Voest-Alpine Information", Nr. 40 ist ein Plasmabrenner bekannt, bei dem wassergekühlte Kupferrohre mit Wolframkathoden vorgesehen sind. Diese Brenner werden seitlich in einen Ofen eingeführt. Als Trägergas für die Plasmabrenner und damit auch als Schutzgas für die Stahlschmelze des Schmelzofens wird Argon verwendet. Die genannten Plasmabrenner sind auf Laffetten montiert und sind mit ihren Mündungen auf das Schmelzgut gerichtet. Die Plasmabrenner befinden sich oberhalb der Schmelzbadebene. Ein Eintauchen des Anoden-Kupferrohres und der Wolframkathode in die Schmelze ist nicht vorgesehen. Auch besteht die Gefahr, daß beim Eintauchen Kühlwasser in die Schmelze gelangt und eine explosionsartige Dampfentwicklung zur Zerstörung des Ofens führen kann.

Der Erfindung liegt nun die Aufgabe zugrunde, eine Plasmabrenner der eingangs genannten Art zu schaffen, welcher einerseits zumindest in der rohrförmigen Außenelektrode eine gute Stromleitfähigkeit und damit geringe Verlustleistung aufweist und der auch im in eine Metallschmelze eingetauchten Zustand ohne weiteres und ohne Umrüstung betreibbar sein soll. Des weiteren soll der Plasmabrenner einfach und betriebssicher ausgebildet sein, wobei ein kontinuierliches Nachschieben der rohrförmigen Außenelektrode und/oder der koaxialen Zentraleketrode vermieden werden soll.

Die Aufgabe wird erfindungsgemäß dadurch gelöst, daß die rohrförmige Außenelektrode einen ersten aus elektrisch leitendem Metall bestehenden gekühlten lichtbogeninaktiven Rohrabschnitt sowie daran anschließend einen zweiten lichtbogenaktiven ungekühlten, aus temperaturbeständigem und elektrisch leitendem Material bestehenden Rohrabschnitt aufweist, der lösbar mit dem ersten Abschnitt verbunden ist und daß der Lichtbogen zwischen dem zweiten Rohrabschnitt und dem benachbarten lichtbogenaktiven Abschnitt der koaxialen Zentralelektrode verläuft. Hieraus ergibt sich der Vorteil, daß der in die Metallschmelze eingetauchte Bereich der zweite Rohrabschnitt der rohrförmigen Außenelektrode ist, welcher aus temperaturbeständigem und elektrisch leitendem Material besteht. Dieser zweite Rohrabschnitt ist der lichtbogenaktive Abschnitt, zwischen dem und dem entsprechenden benachbarten Bereich der zentralen Elektrode der Lichtbogen gebildet wird, welcher das Plasma aus dem Zuführungsgas bildet.

Dadurch, daß der zweite Abschnitt lösbar mit dem anschließenden gekühlten Außenrohrabschnitt verbunden ist ergibt sich der Vorteil, daß nach entsprechender Abnutzung (Verzehr) dieses lichtbogenaktiven zweiten Rohrabschnittes dieser ohne weiteres durch einen neuen zweiten Rohrabschnitt ausgewechselt werden kann. In vorteilhafter Weise kann das zur Plasmabildung dienende Gas zur Kühlung des lichtbogeninaktiven Bereiches des Plasmabrenner herangezogen werden.

In zweckmäßiger Weise ist der erste Rohrabschnitt der rohrförmigen Außenelektrode an der Innenwand zumindest in dem zweiten Rohrabschnitten benachbarten Bereich mit einer elektrisch isolierenden Beschichtung versehen. Hieraus ergibt sich der Vorteil, daß der Lichtbogen nicht auf den ersten Rohrabschnitt übertragen wird.

Zweckmäßigerweise ist der erste Rohrabschnitt der rohrförmigen Außenelektrode an der Außenwand mit einer Schutzbeschichtung versehen. Hieraus ergibt sich der Vorteil einer Abschirmung des ersten Rohrabschnittes nach außen hinsichtlich Wärme und chemische Einwirkung von außen.

Gemäß einer weiteren Ausbildung besteht der zweite Rohrabschnitt der rohrförmigen Außenelektrode aus graphitischem Werkstoff. Dies hat den Vorteil, daß ein unempfindlicher zweiter Elektrodenabschnitt geschaffen ist, welche nicht nur gute elektrische Leitfähigkeit aufweist sondern darüber hinaus auch hitzebeständig ist. Durch entsprechende Zugabe von weiteren Materialen kann darüber hinaus eine günstige mechanische Festigkeit und Bearbeitbarkeit erzielt werden.

Gemäß einer weiteren Ausgestaltung kann der zweite Rohrabschnitt einen Schutzmantelbereich aufweisen, der einen Teil des ersten Rohrabschnittes überlappend umgibt. Hieraus ergibt sich der Vorteil, daß der dem zweiten Rohrabschnitt benachbarte Endbereich des ersten Rohrabschnittes geschützt ist, woraus sich eine vorteilhafte Abschirmwirkung ergibt. Diese Abschirmwirkung wirkt sich insbesondere sichernd für das Kühlsystem des ersten Rohrabschnittes aus.

Zur Erhöhung der elektrischen Leitfähigkeit des zweiten Rohrabschnittes der Außenelektrode kann dieser auf der Innenseite mit einer elektrisch leitenden und thermisch resistenten Schutzschicht versehen werden.

Der zweite Rohrabschnitt kann mit einem aus Bornitrid bestehendem Außenrohr versehen sein, welches auf den zweiten Rohrabschnitt aufgeschraubt ist.

Wie vorstehend bereits ausgeführt besteht die Zentralelektrode aus Graphit. Hierbei handelt es sich vorzugsweise um imprägnierten Graphit mit einem Maximalkorn bis 4 mm, der weniger als 20 % Feinkornanteil einer Korngröße unter 1 mm aufweist. Die zentrale Graphitelektrode besitzt häufig einen maximalen Durchmesser von 350 mm. Die Graphitqualität wird mit Vorteil derart gewählt, daß die Dichte im Bereich von 1,64 bis 1,68 g/cm$^3$ liegt.

Um eine gute Beständigkeit gegen den starken Thermogradienten im Material, der durch die örtliche Langzeiterhitzung des stabilen Plasmabogens hervorgerufen wird, zu erreichen, kann vorteilhaft einen Graphitkornaufbau mit geringst möglichem Feinstkornanteil gewählt werden. Eine im Rahmen der Erfindung bevorzugte typische Kornverteilung des Graphites umfaßt beispielsweise etwa 50 % eines Körnungsbereiches von 2 bis 4 mm, etwa 35 % eines Körnungsbereiches von 1 bis 2 mm sowie 15 % einer Körnung im Bereich von 0 bis 1 mm.

Als Koksmaterial werden zweckmäßig Nadelkokse mit sehr guter lamellarer Längsstrukturierung ausgewählt, die durch den hohen Zerkleinerungsgrad eine Vielfalt von Mikrocracks in der Körnungsstruktur aufweisen. Damit wird die Thermoelastizität des Gesamtkörpers auch bei sehr guter und fester Einbindung der Kornanteile erhöht. Als Binder werden mit Vorteil Mesophosenpeche verwendet. Diese können etwa der nachfolgenden Spezifikation sein:

| | |
|---|---|
| Flüchtige Bestandteile: | 38 % |
| Verkokungszahl: | 64 % |
| Erweichungspunkt: | nicht bestimmbar |
| Siebanalyse | |
| > 0,1 mm | 26 % |
| 0,1 - 0,06 mm | 50 % |
| < 0,06 mm | 24 % |

Diese Spezialpeche wandeln sich bei der Verkokung ebenfalls in strukturell längsorientierte Nadelkokse um, die sich gut graphitieren lassen und damit hohe thermische und elektrische Leitfähigkeit zeigen.

Der Werkstoffaufbau der äußeren Ringelektrode, d.h. des zweiten Rohrabschnittes kann zweckmäßig Körnungen bis zu 8 mm Maximalkorn aufweisen. Besonders bevorzugt ist hierbei ein Körnungsaufbau mit Ausfallkorn, wie er bei stark thermoschockbeanspruchten keramischen Werkstoffen eingesetzt ist. Eine typische Körnungsverteilung enthält dabei etwa 60 % Korn einer Korngröße im Bereich von 4 bis 8 mm, etwa 15 % einer Korngröße im Bereich von 1 bis 4 mm und etwa 25 % einer Korngröße im Bereich von 0 bis 1 mm.

Der graphitische Werkstoff für die äußere Ringelektrode bzw. deren zweiten Rohrabschnitt wird zweckmäßig bei der Herstellung nicht mit Teer/Pech nachverdichtet, damit die Poren Zutritt lassen für die Diffusion von metallischen Dämpfen und Flüssigkeiten, die mit Teilen des Graphits zur Erhöhung der Hochtemperatur-Oxidations-Beständigkeit reagieren können. Dabei können zumindest oberflächliche Verbundwerkstoffe aus Graphit und Metallcarbid gebildet werden, die unter dem Namen Zermet-Werkstoffe bekannt sind. Diese sind insbesondere auf Basis Graphit/SiC, Graphit/TiC und Graphit/$B_4C$ gebildet.

Die Erzeugung dieser Werkstoffe, die vorzugsweise 15 bis 40 Gew.% carbidischer Komponente enthalten, kann, ausgehend von einem synthetischen Graphitgerüst, entweder durch Imprägnierung mit dem Metall, oder durch Eindiffusion der gasförmigen Metalle, oder von gasförmigen Verbindungen, die sich bei hoher Temperatur mit dem Graphit zu Carbiden umsetzen, erfolgen. Derartige Verfahren sind bekannt. Ein anderer Weg führt zu diesen Stoffen durch Reaktionssintern der Carbide bei Anwesenheit von Graphit und Sinterhilfsmitteln, z.B. den oxidischen Verbindungen des Yttriums oder Lanthans.

Die nach den verschiedenen Verfahren erhaltenen Zermets besitzen eine höhere spezifische Dichte als Graphit. Sie variieren je nach Carbidisierungsgrad von 2,10 bis 2,70 $g/cm^3$, wobei typische Werte im Bereich von 2,3 bis 2,5 $g/cm^3$ liegen. Dabei ist es im Rahmen der Erfindung insbesondere bevorzugt, wenn die genannten Zermet-Werkstoffe Zugfestigkeiten ($kg/cm^2$) im Bereich von 300 bis 600, Druckfestigkeiten ($kp/cm^2$) im Bereich von 1.300 bis 5.400 und Biegefestigkeiten ($kp/cm^2$) im Bereich von 700 bis 1.200 aufweisen.

Zweckmäßigerweise ist der zweite Rohrabschnitt, welcher mit einem Innengewinde versehen ist, auf den ersten Rohrabschnitt aufgeschraubt.

In besonders vorteilhafter Weise besteht die Zentralelektrode zumindest im lichtbogenaktiven Endbereich aus graphitischem Werkstoff und ist über eine Zapfen-Schachtverbindung mit dem übrigen Zentralelektrodenteil verbunden. Hieraus ergibt sich der Vorteil, daß der Lichtbogen zwischen dem zweiten Rohrabschnitt, der insbesondere aus graphitischem Werkstoff besteht, und dem lichtbogenaktiven Teil der Zentralelektrode geführt wird. Bei einer solchen Ausgestaltung ergeben sich Vorteile hinsichtlich der Materialbeständigkeit und Lichtbogenführung insbesondere im in die Metallschmelze eingetauchten Zustand des zweiten Rohrabschnittes und des zugeordneten Zentralelektrodenabschnittes.

Ein weiterer Vorteil ist darin zu sehen, daß bei Abnutzung des lichtbogenaktiven Endabschnittes der Zentralelektrode dieser Abschnitt in einfacher Weise ausgewechselt werden kann.

In vorteilhafter Weise ist der übrige Zentralelektrodenteil mit einer isolierenden Beschichtung versehen. Diese Beschichtung wirkt sich vorteilhaft dahingehend aus, daß der Lichtbogen von der rohrförmigen Außenelektrode nicht auf diesen isolierten Zentralelektrodenteil übertragen werden kann.

Gemäß einer weiteren Ausbildung besteht der übrige Zentralelektrodenteil aus elektrisch leitfähigem Metall und ist mit einer Kühlung versehen. Der nicht in die Metallschmelze eingetauchte Teil der Zentralelektrode ist bzw. wird gekühlt, während der angrenzende eingetauchte Abschnitt der Zentralelektrode ungekühlt ist, da er aus temperaturbeständigem und elektrisch leitfähigem Material (graphitischem Material) besteht.

Gemäß einer anderen vorteilhaften Ausgestaltung besteht der übrige Zentralelektrodenteil aus graphitischen Elektrodenteilen, die jeweils über Zapfen-Schachtverbindungen zusammengefügt sind. In diesem Falle ist die Außenschicht der Zentralelektrode zweckmäßigerweise mit einem elektrisch leitfähigem Überzug und gegebenenfalls darüber mit einer elektrisch isolierenden Schicht versehen. Dieses hat den Vorteil, daß die Stromführung nicht nur durch die Zentralelektrode selbst sondern auch durch die elektrisch leitende Überzugsschicht erfolgt. Die abschließende elektrisch isolierte Schicht hat den bereits zuvor erwähnten Vorteil der Lichtbogeninaktivität.

Gemäß einer weiteren Ausgestaltung ist die Zentralelektrode als Anode mit dem Pluspol und die rohrförmige Außenelektrode als Kathode mit dem Minuspol einer Gleichstrom-Versorgungsquelle verbunden. Selbstverständlich kann anstelle einer Gleichstrom-Versorgungsquelle auch eine Wechselstromquelle oder aber eine pulsierende Gleichstromquelle verwendet werden.

0202352

Die Verwendung der rohrförmigen Außenelektrode als Kathode und der Zentralelektrode als Anode weist den Vorteil auf, daß die als Hauptladungsträger dienenden Elektronen von dem zweiten rohrförmigen Abschnitt der Außenelektrode ausgehen und zum zugeordneten Abschnitt der Zentralelektrode fließen, so daß der eigentliche Materialverzehr am zweiten rohrförmigen Elektrodenabschnitt auftritt. Der in umgekehrter Richtung fließende Ionenstrom (positive Ladungsträger) ist vergleichsweise gering gegenüber dem Elektronenstrom.

Gemäß einer weiteren Ausgestaltung erfolgt die Kühlung des ersten Rohrabschnittes der Außenelektrode und gegebenenfalls der Zentralelektrode oder Teilen davon durch ein Kühlsystem mit Hilfe von Flüssigkeit oder Wärmerohren (Heat Pipes).

Das Kühlsystem weist einen Kühlmediumgeber auf, der hinsichtlich der Temperatur des Kühlmediums und/oder der Durchflußleistung durch eine Kühlmedium-Regelstufe geregelt ist. Die Kühlmedium-Regelstufe ist mit einem thermoelektrischen Wandler verbunden, der im jeweiligen gekühlten Endbereich der rohrförmigen Außenelektrode und gegebenenfalls der Zentralelektrode vorgesehen ist.

Gemäß einer weiteren vorteilhaften Ausgestaltung weist die Zentralelektrode einen Kanal für ein Zusatzmedium, insbesondere für ein reduzierendes bzw. inertes bzw. leicht oxidierendes Gas, auf, das durch mindestens eine Austrittsöffnung nach außen über den durch den zweiten Rohrabschnitt der Außenelektrode und den Zentralelektrodenabschnitt begrenzten Zwischenraum gelangen.

Der erfindungsgemäße Plasmabrenner ist in vorteilhafter Weise in einen Kupolofen zum Metallschmelzen anwendbar, welcher einen oberen Beschickungsschachtraum, einen unteren Schmelzenraum und dazwischen einen gekühlten Rost aufweist. Kupolöfen werden mit Koks oder kokslos betrieben. Bei Koks-Kupolöfen dient als Brennstoff Koks, während bei kokslosen Kupolöfen Öl oder Gas als Brennstoff verwendet wird. Die Verbrennung erfolgt bei Koks-Kupolöfen durch Luft vor den Düsen, während bei kokslosen Kupolöfen die Luft in den Brennern zugeführt wird. Der erfindungsgemäße Plasmabrenner eignet sich insbesondere für kokslose Kupolöfen. Die kokslosen Kupolöfen weisen wassergekühlte Roststäbe über der Brennerebene auf, wobei zur Überhitzung des herabtropfenden Eisens in Verbindung mit einer Vergrößerung der Berührungsoberfläche Kugeln aus keramischen Material auf dem wassergekühlten Rost vorgesehen sind. Die Zone höchster Temperatur und der größten Oxidation ist hierbei in den Brennern unterhalb des Einsatzes. Zur Aufkohlung wird bei kokslosen Kupolöfen körniges Aufkohlungsmittel eingebracht, und zwar durch Injektion unterhalb des wassergekühlten Rostes.

Bei herkömmlichen kokslosen Kupolöfen wird die Schmelze nach dem Einschmelzvorgang in eine gesonderte Wanne überführt, in der die Temperatur der Schmelze mit Hilfe eines Induktors auf den entsprechenden Wert gebracht wird. In vorteilhafter Weise ist nun der erfindungsgemäße Plasmabrenner, der seitlich in den Schmelzraum des kokslosen Kupolofens ragt, zumindest längs seiner Achse derart verstellbar, daß er zumindest in der Anfangsphase der Einschmelzphase der Beschickung eine erste Position mit außerhalb der Schmelze befindlicher Plasmalanze und in der anschließenden Phase eine zweite Position aufweist, in der der zweite Abschnitt der rohrförmigen Außenelektrode und der zugehörige Zentralelektrodenteil zumindest teilweise in die Schmelze eingetaucht ist.

Hierbei steht der Plasmabrenner mit einer Steuer- und Regelvorrichtung zur Bewegungssteuerung des Plasmabrenners sowie zur Steuerung und Regelung der Spannungsversorgung, des Medienflusses und/oder der Kühlung in Verbindung. Daraus ergibt sich der Vorteil, daß die Metallschmelze nach Beendigung des Einschmelzvorganges in dem Schmelzenraum verbleiben kann, da mit Hilfe der Steuer- und Regelvorrichtung der Plasmabrenner in die Schmelze eingetaucht wird und deren Temperatur entsprechend geregelt wird, wobei zusätzlich weitere Mittel insbesondere gasförmig zugegeben werden können. Demnach wird der Plasmabrenner sowohl für die Einschmelzphase als auch für die anschließende Phase in ein und demselben Schmelzen-Aufnahmeraum verwendet.

Im folgenden wird die Erfindung anhand von in den Figuren dargestellter Ausführungsbeispiele beschrieben. Es zeigen:

Fig. 1     in schematischer Darstellung den Teil eines kokslosen Kupolofens in Verbindung mit Plasmabrennern in der Einschmelzphase,

Fig. 2     den kokslosen Kupolofen mit in die Schmelze eingetauchten Plasmabrennern,

Fig. 3     in schematischer Darstellung eine Steuer- und Regelschaltung für einen Plasmabrenner,

Fig. 4     eine schematische Schnittdarstellung eines Plasmabrenners,

Fig. 5     im Schnitt den Endbereich des gekühlten ersten Rohrabschnittes der Außenelektrode,

Fig. 6     einen Schnitt durch diesen Rohrabschnitt,

Fig. 7     einen wassergekühlten Endabschnitt des ersten Außenelektrodenabschnittes,

Fig. 8     eine Abwicklung des ersten Abschnittes der Außenelektrode,

Fig. 9     einen Schnitt durch den Endbereich des Plasmabrenners mit gekühltem ersten Abschnitt der rohrförmigen Außenelektrode sowie der Zentralelektrode,

Fig. 10    im Schnitt den Endbereich des Plasmabrenners mit gekühlter Zentralelektrode und einem Zuführkanal für ein zusätzliches Medium und

Fig. 11 im Schnitt den Endbereich einer gekühlten Zentralelektrode mit Temperaturfühler.

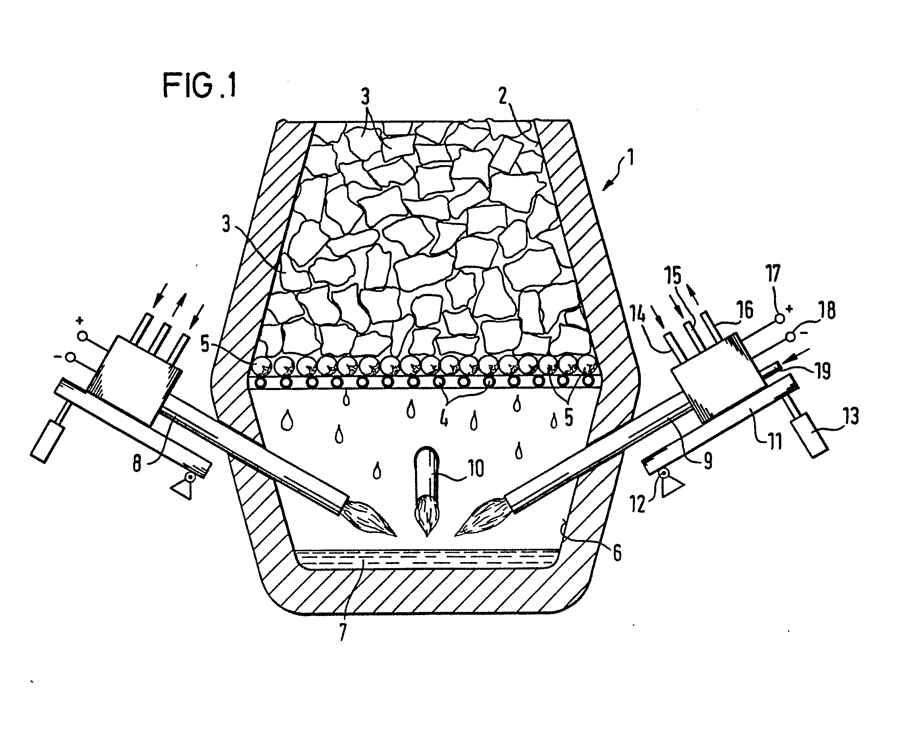

Gemäß Fig. 1 ist mit 1 ein koksloser Kupolofen bezeichnet, welcher einen schachtförmigen Beschickungsraum 2 für eine Eisenerzbeschickung 3 aufweist. Mit 4 ist ein wassergekühlter Rost bezeichnet, auf dem keramische Kugeln 5 aufliegen. Mit 6 ist ein Brenner- und Schmelzenraum bezeichnet, in den die Eisenschmelze heruntertropft und sich als Schmelzenbad 7 sammelt. Mit 8, 9 und 10 sind gleichartige Plasmabrenner bezeichnet, die von außen seitlich schräg nach innen in den Schmelzenraum 6 ragen. Jeder Plasmabrenner ist lafettenartig auf einem Trägerteil 11 verschiebbar, und zwar in Achsrichtung des Plasmabrenners. Das Trägerteil ist um eine Gelenkachse 12 schwenkbar, und zwar mit Hilfe eines hydraulischen Antriebes 13. Mit 14 ist eine Zufuhrleitung für ein plasmabildendes Gas bezeichnet. Mit 15 und 16 sind Rohranschlüsse für Kühlwasser bezeichnet. Anschlüsse 17 und 18 führen zum Pluspol und Minuspol einer nicht dargestellten Gleichstromquelle. Mit 19 ist ein Rohranschluß für ein Zusatzmedium bezeichnet. Gemäß Fig. 1 befinden sich die Plasmabrenner mit ihren lanzenartigen Flammenspitzen (Plasmalanzen) oberhalb des Schmelzbades 7.

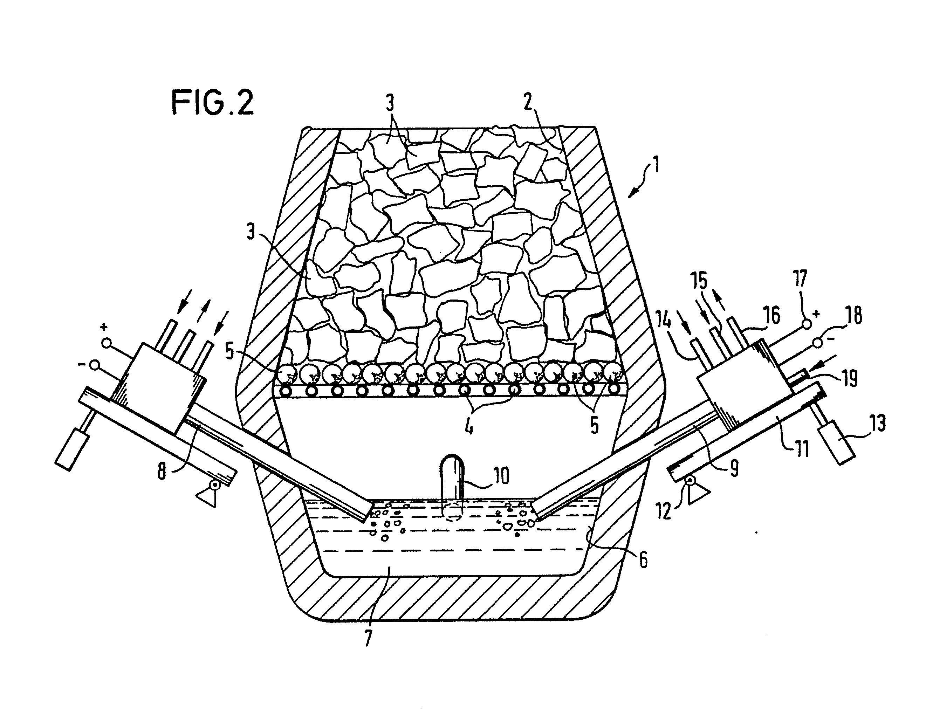

In Fig. 2 sind die den Teilen gemäß Fig. 1 entsprechenden Teile mit gleichen Bezugszeichen versehen. Im Unterschied zu Fig. 1 ist in der Darstellung von Fig. 2 der Schmelzvorgang beendet, wobei die jeweiligen Spitzen- oder Endbereiche der Plasmabrenner 8, 9 und 10 in das Schmelzenbad des Eisens eingetaucht sind.

In nicht dargestellter Weise wird das Schmelzenbad auf einer vorgegebenen Temperatur gehalten bzw. auf eine vorgegebene Temperatur gebracht. Des weiteren wird durch Eingabe des Zusatzmediums über den Anschluß 19 ein Nachbehandlungsprozeß durchgeführt. Der Druck des plasmabildenden Gases, welches über den Anschluß 14 zugeführt wird, ist so groß, daß es den hydrostatischen Druck der Schmelze überwindet.

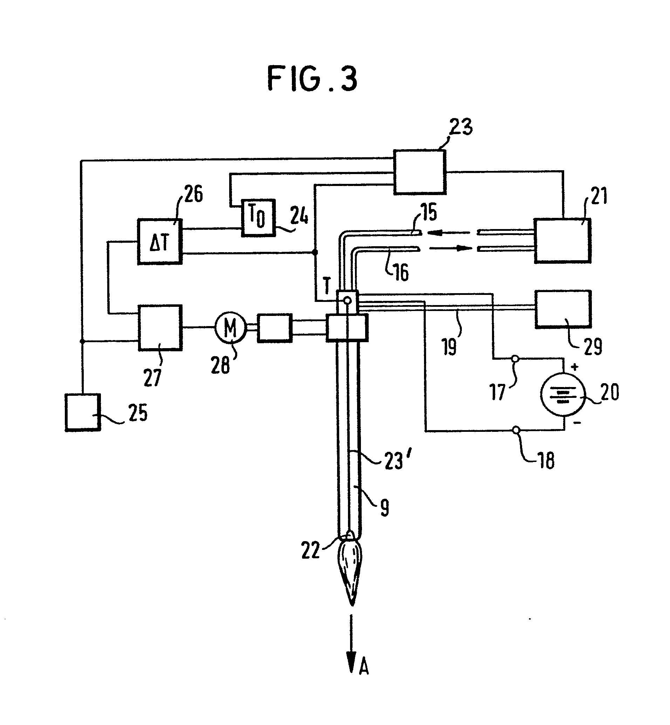

In Fig. 3 sind die den Teilen von Fig. 1 oder 2 entsprechenden Teile mit gleichen Bezugszeichen versehen.

Die zum positiven Anschluß einer Gleichstromquelle 20 führende Leitung führt gemäß Fig. 3 zur nicht dargestellten stabförmigen Zentralelektrode des Plasmabrenners 8 bzw. 9 bzw. 10. Die zum negativen Anschluß der Gleichstromquelle 20 führende Leitung führt in nicht dargestellter Weise zum rohrförmigen Abschnitt der Außenelektrode des Plasmabrenners 8 bzw. 9 bzw. 10.

Die Zuführungsleitung 15 und die Abführungsleitung 16 für die Kühlflüssigkeit sind mit einem Kühlflüssigkeitsgeber 21 verbunden. Von einem im Spitzen- oder Endbereich des Plasmabrenners 9 vorgesehenen Thermoelement 22 führt eine elektrische Verbindung 23 zu einer Kühlflüssigkeits-Regelstufe 23', die eine weitere Eingangs-Steuerverbindung mit einer Vergleichs-Temperaturstufe 24 sowie eine dritte Steuerverbindung zu einer Schmelzenpegel-Meßstufe 25 aufweist. Von der Vergleichs-Temperaturstufe 24 führt eine weitere Verbindung zu einer Temperatur-Differenzstufe 26, die über die Steuerverbindung 23 mit dem genannten Thermoelement verbunden ist.

Mit 27 ist eine Motorsteuerstufe bezeichnet, die einerseits mit der Temperatur-Differenzstufe 26 und andererseits mit der Schmelzenpegel-Meßstufe 25 verbunden ist. Deren Ausgang ist an einen Motor 28 angeschlossen, durch den der Plasmabrenner in Pfeilrichtung A oder in entgegengesetzter Richtung bewegbar ist. Mit Hilfe der Kühlflüssigkeits-Regelstufe 23 wird in Abhängigkeit von der durch den thermoelektrischen Wandler 22 gemessenen Temperatur sowie in Abhängigkeit von der eingestellten Vergleichstemperatur in der Stufe 24 sowie in Abhängigkeit von dem Signal der Schmelzenpegel-Meßstufe 25 bei eingetauchtem Plasmabrenner ein Ausgangssignal erzeugt, welches einerseits die Temperatur und andererseits die Durchflußmenge der Kühlflüssigkeit in der Vorrichtung 21 regelt. In der Temperatur-Differenzstufe 26 wird ein Steuersignal für die Motorsteuerschaltung 27 erzeugt, um bei eventuellen Temperaturerhöhungen im Bereich der lichtbogenaktiven Teile des Plasmabrenners die Kühlung entsprechend zu regeln. Mit 29 is eine Steuervorrichtung für die Zugabe eines Zusatzmedium durch die Leitung 19 bezeichnet.

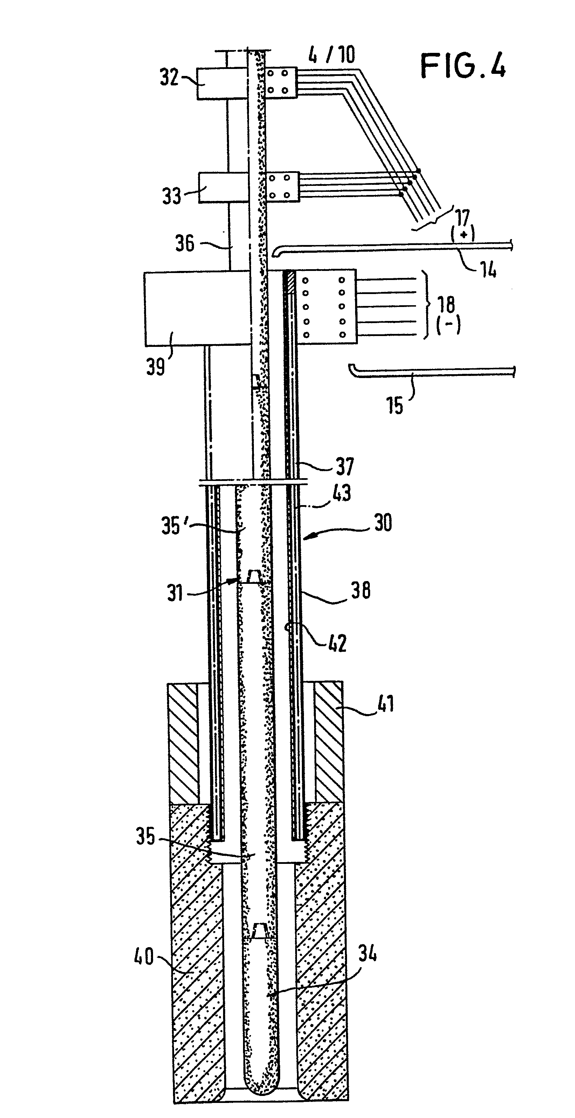

In Fig. 4 sind die den Teilen gemäß den Fig. 1 bis 3 entsprechenden Teile mit gleichen Bezugszeichen versehen. Der Plasmabrenner 8 bzw. 9 bzw. 10 besteht aus einer rohrförmigen Außenelektrode 30 und aus einer stabförmigen Zentralelektrode 31. Die stabförmige Zentralelektrode 31 besteht aus graphitischem Material und ist über Stromanschlußstellen 32 und 33 und die entsprechenden Stromführungskabel mit der Anschlußstelle 17 verbunden, welche zum Pluspol der in Fig. 3 dargestellten Gleichstromquelle 20 führt.

Die stabförmige Zentralelektrode besteht aus Stabsegmenten 34, 35, 35' und 36, welche jeweils über Zapfen-Schachtverbindungen zusammengefügt sind.

Die rohrförmige Außenelektrode 30 ist gekühlt und besteht aus einem ersten rohrförmigen Abschnitt aus elektrisch leitfähigem Metall. Dieser metallrohrförmige, mit Ringkammern versehene Außenelektrodenabschnitt ist wiederum unterteilt in einen ersten Teilabschnitt 37 aus Kupfer und einen anschließenden Teilrohrabschnitt 38 aus Stahl. Mit 39 ist eine Stromzuführung bezeichnet, welche über Verbindungskabel zur Anschlußstelle 18 führt, die wiederum mit dem Minuspol der Gleichstromquelle 20 verbunden ist.

Mit 40 ist ein aus graphitischem Material bestehendes Rohrstück bezeichnet, welches mit Innengewinde versehen ist und auf ein Außengewinde am Ende des ersten Rohrabschnittes 38 aufgeschraubt ist. Mit 41 ist ein Abschirm- und Sicherungs-Rohrabschnitt bezeichnet, welcher mit dem Rohrteil 40 verbunden ist und den Endbereich des ersten Rohrabschnittes überlappt.

Dieser Abschirm-Rohrabschnitt 41 besteht vorzugsweise aus thermisch resistenten leitfähigen Material und ist elektrisch isolierend ausgebildet.

Im ersten Rohrabschnitt 37 und 38 der Außenelektrode ist in nicht dargestellter Weise in Ringkammern ein Kühsystem vorgesehen, um diesen Metallrohrabschnitt entsprechend zu kühlen und um darüber hinaus eine gute elektrische Leitfähigkeit zu haben.

0202352

Die Innenseite des ersten Rohrabschnittes der Außenelektrode ist mit einer elektrischen Isolationsschicht versehen, um diesen ersten Rohrabschnitt
lichtbogeninaktiv zu machen. Diese Isolationsschicht
ist mit 42 bezeichnet.

Die stabförmige Innenelektrode aus graphitischem Material kann z.B. durch entsprechende Zusätze elektrisch so verbessert werden, daß eine zufriedenstellende Stromführung bei geringen Verlusten gewährleistet ist. Außerdem besteht die Möglichkeit, die stabförmige Innenelektrode oder Zentralelektrode mit
einem leitfähigen Überzug zu versehen, der wiederum
im lichtbogeninaktiven Bereich mit einer Isolierschicht versehen sein kann.

Der lichtbogenaktive Teil der Zentralelektrode ist
der mit 34 bezeichnete Teil, während der lichtbogenaktive Teil der rohrförmigen Außenelektrode der mit
40 bezeichnete Teil oder Abschnitt ist. Zwischen dem
Abschnitt 34 der Zentralelektrode und dem Abschnitt
40 der Außenelektrode entsteht bei Beaufschlagung des
Plasmabrenners mit genügend hoher Spannung und nach
in nicht dargestellter Weise durchgeführter kurzzeitiger elektrischer Verbindung der Anode mit der Kathode ein Lichtbogen, durch den das über die Zuführung 14 zugeführte Gas in ein Plasma umgewandelt
wird. Nach der Bildung des Lichtbogens fließen Elektronen von dem Kathodenrohrabschnitt 40 zum Zentralabschnitt 34 der Anode sowie positive Ionen vom Anodenabschnitt 34 zum Kathodenabschnitt 40. Der Elektronenfluß ist in der Regel sehr viel größer als der Ionenfluß. Der Ladungsträgerfluß ist von einem Magnetfeld umgeben, welches bei gekrümmtem Lichtbogen einen Gradienten des Magnetfeldes hervorruft. Da der Lichtbogen nach außen gekrümmt ist, entsteht eine durch die Lorentzkraft bedingte Kraftkomponente in Richtung auf die Plasmabrennerspitze mit der Folgewirkung, daß sich der Lichtbogen im Endbereich des Plasmabrenners ausbildet.

Dadurch, daß der Rohrabschnitt der Außenelektrode als Kathode und der zugeordnete Abschnitt 34 der Zentralelektrode als Anode wirkt, ergibt sich der Vorteil, daß der Zentralabschnitt 34 weniger stark abgenutzt wird als der rohrförmige Außenabschnitt 40.

Das Vorsehen des thermisch gut leitenden, den ersten Rohrabschnitt 38 der Außenelektrode überlappenden Schutzrohrabschnittes 41 bringt den Vorteil, daß der überlappte Bereich des ersten Rohrabschnittes der Außenelektrode insbesondere thermisch geschützt wird, insbesondere im Hinblick auf das in ihm befindliche Kühlsystem. In Fig. 4 ist das Kühlsystem durch das Bezugszeichen 43 angedeutet.

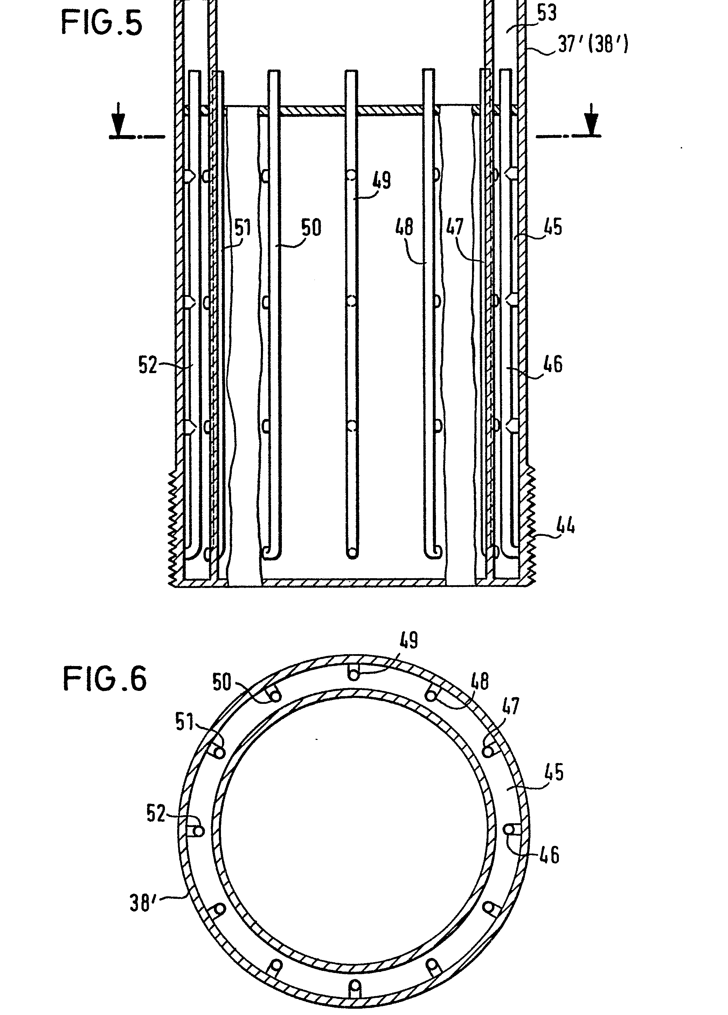

In den Fig. 5 und 6 ist eine erste Ausführungsform eines solchen Kühlsystems innerhalb des ersten Rohrabschnittes der Außenelektrode dargestellt. In den Fig. 5 und 6 sind die der Fig. 4 entsprechenden Teile mit gleichen Bezugszeichen versehen. Zur Unterscheidung weisen diese Bezugszeichen Indizes auf. Der mit Außengewinde 44 versehene Endabschnitt des ersten Rohrabschnittes 38' der Außenelektrode weist einen

abgeschlossenen Ringkammerbereich 45 auf, in dem sogenannte Wärmerohre oder Heat Pipes 46, 47, 48, 49
50, 51 und 52 angeordnet sind, die mit der angrenzenden Ringkammer 53 einen Wärmeaustausch durchführen.
Diese Wärmerohre oder Heat Pipes weisen eine vorgegebene Länge auf, wobei die Trennung zwischen den beiden benachbarten Ringkammern 45 und 53 vorzugsweise
im Anschlußbereich der Stromzuführungen bzw. zumindestens außerhalb des Aufnahmeraumes für die Schmelze
liegt.

Wie aus Fig. 5 ersichtlich ist, weisen die Wärmerohre
jeweils mehrere Berührungsflächen mit der Innenwand
des ersten Rohrabschnittes der Außenelektrode auf.
Auf diese Weise erfolgt an einer Vielzahl von Stellen
des ersten Rohrabschnittes der Außenelektrode eine
Wärmeabführung. Diese Abführstellen sind vorzugsweise
sowohl in Umfangsrichtung als auch in Längsrichtung
des ersten Rohrabschnittes gleichmäßig verteilt.

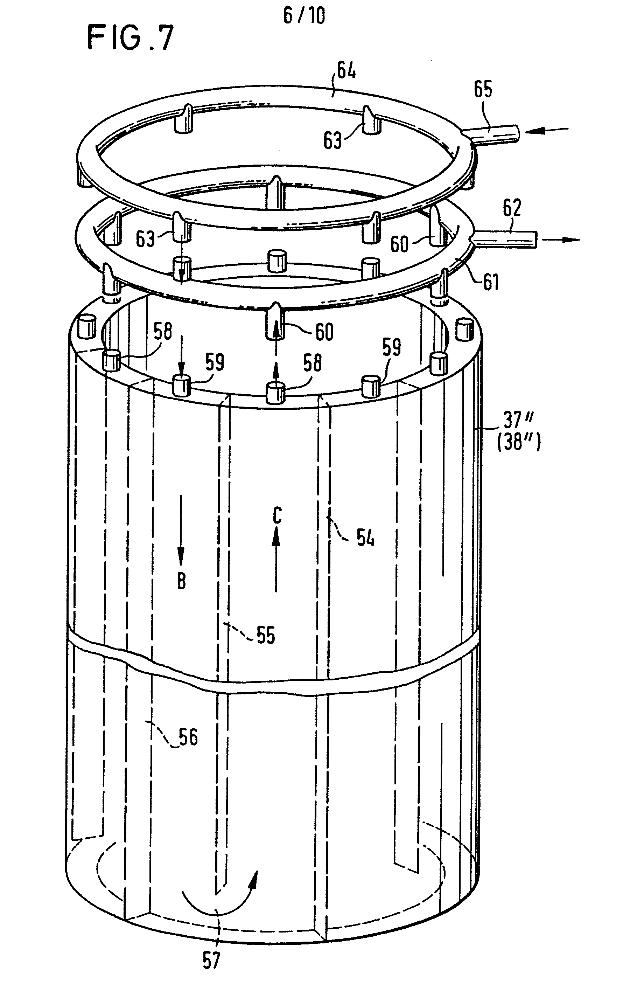

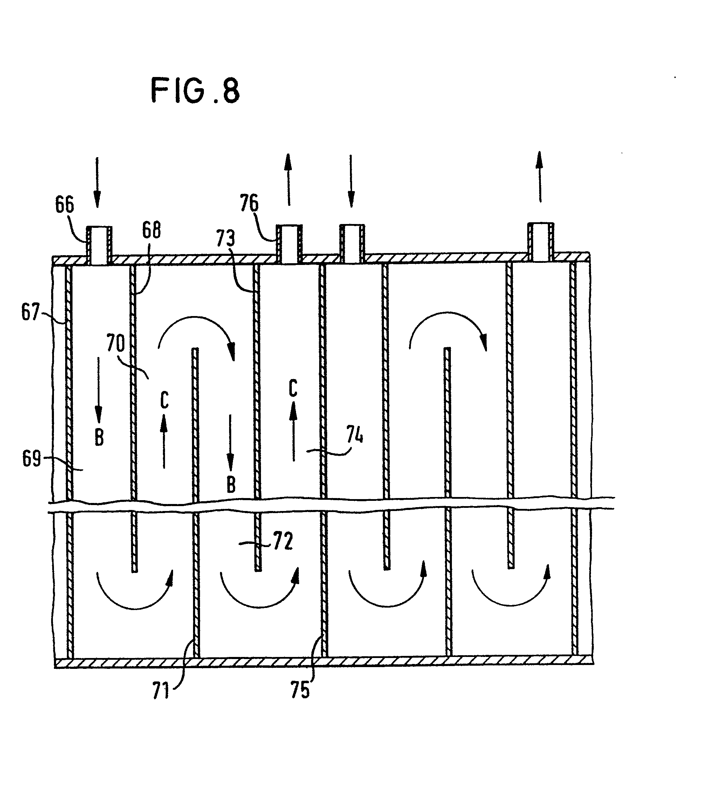

In Fig. 7 ist eine weitere Möglichkeit für ein Kühlsystem im ersten Rohrabschnitt der Außenelektrode
dargestellt. Hierbei sind die den Teilen von Fig. 4
bzw. 5 bzw. 6 entsprechenden Teile mit den gleichen
Bezugszeichen versehen. Zur Unterscheidung weisen
diese gleichen Bezugszeichen Indizes auf. Der erste
Rohrabschnitt 37" und 38" ist als Doppelrohrabschnitt
ausgebildet, der als Ringkammer bezeichnet wird. Diese Ringkammer 37" bzw. 38" ist mit in Längsrichtung
verlaufenden Trennwänden 54, 55, 56 versehen, von
denen die Trennwand 55 einen Durchbruchbereich 57
aufweist, so daß durch die Trennwände 54, 55, 56 zwei miteinander in Verbindung stehende Unterkammern gebildet werden. Diese Anordnung der Trennwände wiederholt sich über den gesamten Umfang. Die durch die benachbarten Trennwände 54 und 55 begrenzte Kammer
weist einen Anschluß 58 auf, während die durch die
Trennwände 55 und 56 gebildete Kammer einen Anschluß
59 aufweist. Der Anschluß 58 steht mit einem entsprechenden Anschluß 60 einer Ringleitung 61 in Verbindung, welche über einen Abflußanschluß 62 mit einer
der Vorrichtung 21 entsprechenden Vorrichtung (Fig.
3) in Verbindung steht. Entsprechendes gilt für die
weiteren nicht näher bezeichneten Abflußanschlüsse
auf der Seite des ersten Rohrabschnittes sowie auf
der Seite der Ringleitung. Der Zuflußanschluß 59 korrespondiert mit einem entsprechenden Anschluß 63
einer weiteren Ringleitung 64, die über einen Anschluß 65 mit der Zufuhrleitung in Verbindung steht,
welche zum Kühlflüssigkeitssystem führt. Der Kühlflüssigkeitsfluß geschieht derart, daß die Kühlflüssigkeit jeweils durch den Einlaufanschluß 59 in die
Ringkammer in Richtung B einfließt und über den
Durchlaß 57 in die benachbarte Kammer gelangt und in
Richtung C durch den Auslaßanschluß 58 wieder nach
außen tritt. In den benachbarten Kammerpaaren wiederholt sich das gleiche. Auf diese Weise wird eine
gleichmäßige Kühlung in Umfangsrichtung gesehen gewährleistet. Gemäß Fig. 8 können auch z.B. vier benachbarte Kammern der Ringkammer strömungsmäßig
einander zugeordnet werden. So gelangt durch einen
Einlaß 66 Kühlflüssigkeit in die durch die Trennwände
67 und 68 gebildete Kammer 69 (Richtung B) und wird
dann in die benachbarte Kammer 70 umgelenkt (Richtung C). Diese benachbarte Kammer wird durch die Trennwände 68 und 71 gebildet. Anschließend erfolgt eine Umlenkung des Kühlflüssigkeitsstromes aus der Richtung
C in die Richtung B in die benachbarte Kammer 72, die
durch die Trennwände 71 und 73 gebildet ist. Nach anschließender Umlenkung des Kühlflüssigkeitsstromes in
die Kammer 74, welche durch die Trennwände 73 und 75
gebildet ist, verläßt die Kühlflüssigkeit die Ringkammer über den Austrittsanschluß 76. In den Nachbarkammern erfolgt eine entsprechende Umlenkung des
Kühlflüssigkeitsstromes. Auch bei dieser Ausführungsform sind die jeweiligen Einlaßöffnungen oder -anschlüsse und die jeweiligen Austrittsanschlüsse mit
je einer zugeordneten Ringleitung verbunden.

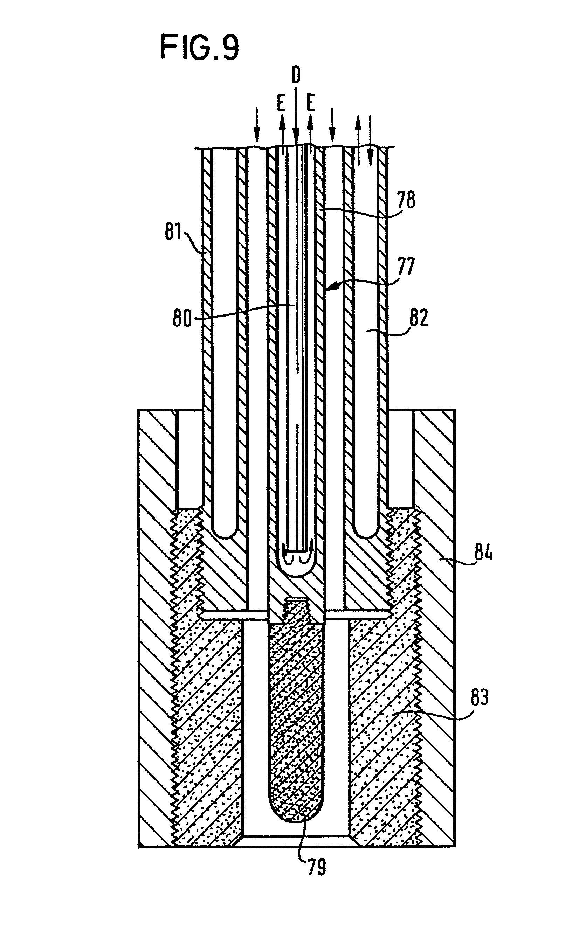

In Fig. 9 ist eine stabförmige Zentralelektrode 77
aus zwei Abschnitten aufgebaut. Der erste Abschnitt
besteht aus einem metallischen gekühlten lichtbogeninaktiven Abschnitt in Form eines Hohlrohres oder
Ringkammerrohres 78 und einem aus graphitischem Werkstoff bestehenden lichtbogenaktiven Stababschnitt 79,
der über eine Zapfen-Schachtverbindung mit dem aus
Metall bestehenden ersten Zentralabschnitt 78 verbunden ist. Dieser metallische Zentralelektrodenrohrabschnitt 78 weist ein Innenrohr 80 auf, welches in die
Hohlkammer bis nahe an den Endbereich heruntergeführt
ist. Durch dieses Zentralrohr wird Kühlflüssigkeit in
Richtung D eingeführt. Die Kühlflüssigkeit verläßt
die Ringkammer wieder in Richtung E. In nicht dargestellter Weise ist die Außenfläche des metallischen
Stabrohrabschnittes der Zentralelektrode mit einem
isolierenden thermisch resistenten Überzug versehen,
um diesen Bereich für den Lichtbogen inaktiv zu
machen.

Der erste Rohrabschnitt der Außenelektrode, der mit 81 bezeichnet ist, ist ebenfalls metallisch ausgebildet. Er weist einen Ringkammerbereich 82, welcher als Kühlkammer für die Kühlflüssigkeit dient.

Auf dem endseitigen Außengewinde dieses Außenelektrodenabschnittes ist ein zweiter Rohrabschnitt 83 aufgeschraubt, welcher aus graphitischem Werkstoff besteht und als aktiver Teil der Kathode für die Lichtbogenbildung dient. Dieser Graphitrohr-Kathodenteil 83 ist mit einem Außengewinde versehen, auf das ein weiteres Rohrteil 84 aufgeschraubt ist, welches aus thermisch gut leitendem und elektrisch isolierendem Material besteht, das darüber hinaus mechanisch gut bearbeitbar ist. Insbesondere besteht dieser Schutzrohr- und Abschirmteil aus Bornitrid. Er überlappt den Endbereich des metallischen ersten Rohrabschnittes der Außenelektrode. Auf diese Weise erzeugt er eine gute Abschirmwirkung. Im gezeigten Beispiel gemäß Fig. 9 ist zwischen dem rückwärtigen Teil des Abschirmrohres 84 und dem metallischen Endbereich des ersten Abschnittes 81 der Außenelektrode ein Zwischenraum. Gemäß einer anderen Möglichkeit kann dieser überlappende Bereich des Abschirmrohres auch an den Außenmantel des metallischen Rohrabschnittes herangeführt sein, um eine zur besseren Wärmeübertragung und -abfuhr dienende Berührung zu schaffen.

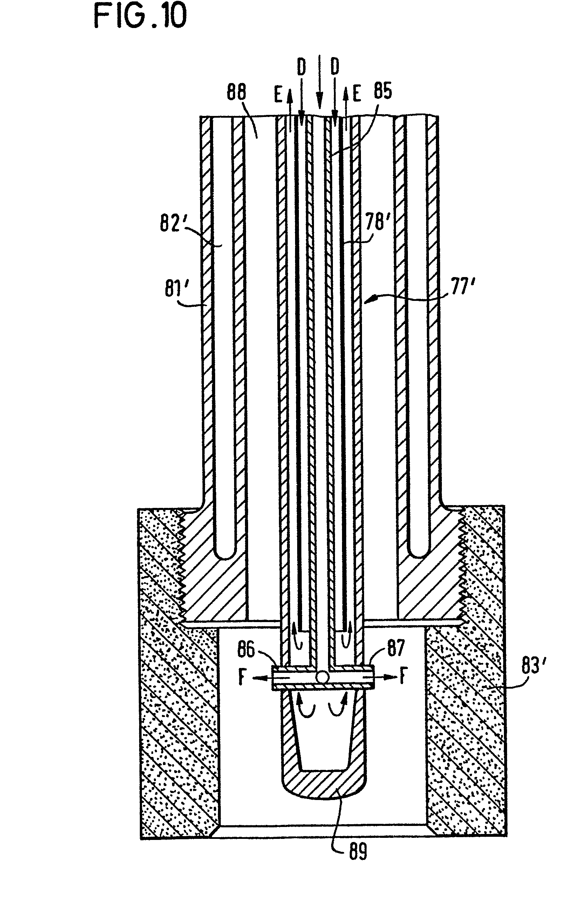

In Fig. 10 sind die den Teilen gemäß Fig. 9 entsprechenden Teile mit gleichen Bezugszeichen versehen. Zur Unterscheidung weisen sie jedoch Indizes auf.

Im Unterschied zum Ausführungsbeispiel gemäß Fig. 9 weist die stabförmige Zentralelektrode 77' ein Innenrohr 85 auf, welches als Kanal bis in den Endbereich der Zentralelektrode geführt ist und über Rohrabschnitte 86 und 87 nach außen geführt ist und auf diese Weise die Möglichkeit eröffnet, daß ein Zusatzmedium, insbesondere Zusatzgas zentral axial übertragen wird und im Endbereich dieser stabförmigen Elektrode nach außen geführt wird (Pfeilrichtung F). Dieses Zusatzmedium kann zur Spezialbehandlung der Schmelze dienen.

Über das Hohlrohr 78' wird Kühlflüssigkeit in die Zentralelektrode gebracht, welche diese bis in den Spitzenbereich kühlt. Das zur Plasmabildung dienende Gas wird durch den Ringkammerbereich 88 zugeführt. Der lichtbogenaktive Teil der Zentralelektrode ist mit 89 bezeichnet. Der lichtbogeninaktive Teil der Zentralelektrode ist mit einem isolierenden Überzug versehen. Gleiches gilt für den lichtbogeninaktiven Teil des ersten Rohrabschnittes der Außenelektrode.

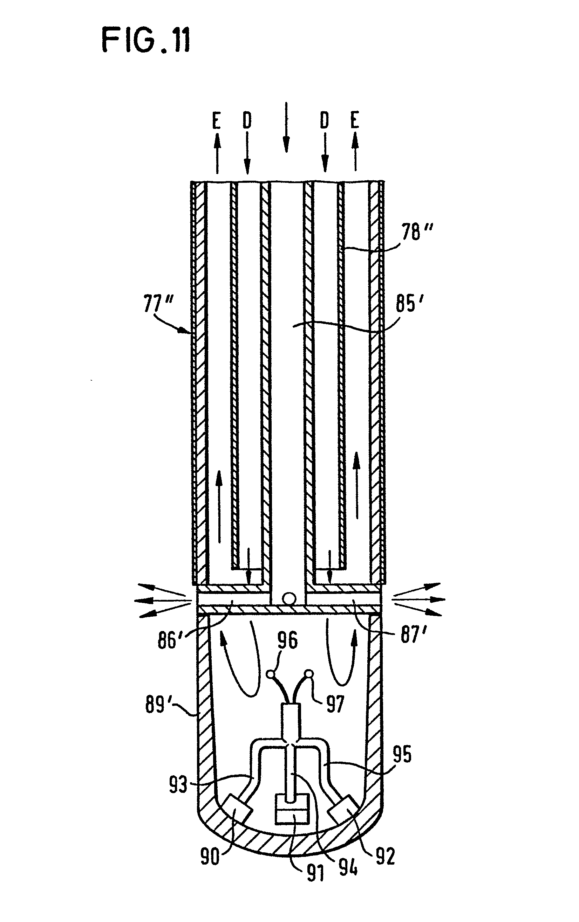

Beim Ausführungsbeispiel gemäß Fig. 11 sind die den Teilen gemäß Fig. 10 entsprechenden Teile mit gleichen Bezugszeichen versehen. Zur Unterscheidung weisen sie jedoch Indizes auf. Hierbei handelt es sich um eine vergrößerte Darstellung der metallischen Zentralelektrode, die im Spitzenbereich des lichtbogenaktiven Teils mit thermoelektrischen Wandlerelementen versehen ist. Diese sind mit 90, 91 und 92 bezeichnet. Isolationsleitungen sind mit 93, 94 und 95 bezeichnet. Zwei für die Thermoelemente 90, 91 und 92 gemeinsame Anschlußleitungen sind mit 96 und 97 bezeichnet. Diese beiden Anschlußleitungen entsprechen der Fühlerleitung 23 von Fig. 3.

Solche thermoelektrischen Wandlerelemente sind auch bei der Ausführungsform von Fig. 9 bzw. 10 im Endbereich des jeweiligen Metallrohrabschnittes der Zentralelektrode anbringbar. Gleiches gilt selbstverständlich auch für die entsprechenden gekühlten Bereiche der Außenelektrode.

Patentansprüche


1.    Plasmabrenner mit einem Elektrodenhalter, der eine rohrförmige Außenelektrode und eine koaxial angeordnete Zentralelektrode trägt, mit einer elektrischen Versorgungsstromquelle, die über Stromzuführungen jeweils mit der Außenelektrode und mit der Zentralelektrode verbindbar ist, und mit einer Einrichtung zur Zuführung von Gas in den Bereich der Elektroden, zwischen denen zur Plasmabildung ein Lichtbogen erzeugt wird, dadurch g e k e n n z e i c h n e t , daß die rohrförmige Außenelektrode (30) einen ersten, aus elektrisch leitendem Metall bestehenden gekühlten, lichtbogeninaktiven Rohrabschnitt (37, 38) sowie daran anschließend einen zweiten lichtbogenaktiven ungekühlten, aus temperaturbeständigem und elektrisch leitendem Material bestehenden Rohrabschnitt (40) aufweist, der lösbar mit dem ersten Rohrabschnitt (37, 38) verbunden ist und daß der Lichtbogen zwischen dem zweiten Rohrabschnitt (40) und dem benachbarten lichtbogenaktiven Abschnitt (34, 35) der koaxialen Zentralelektrode (31) verläuft.


2.    Plasmabrenner nach Anspruch 1, dadurch g e k e n n z e i c h n e t , daß der erste Rohrabschnitt (37, 38) der rohrförmigen Außenelektrode (30) an der Innenwand zumindest in dem dem zweiten Rohrabschnitt (40) benachbarten Bereich mit einer elektrisch isolierenden Beschichtung (42) versehen ist.

3.    Plasmabrenner nach Anspruch 1 oder 2, dadurch g e k e n n z e i c h n e t , daß der erste Rohrabschnitt (37, 38) der rohrförmigen Außenelektrode (30) an der Außenwand mit einer Schutzbeschichtung versehen ist.

4.    Plasmabrenner nach einem der Anspruch 1 bis 3, dadurch g e k e n n z e i c h n e t , daß der zweite Rohrabschnitt (40) der rohrförmigen Außenelektrode (30) aus graphitischem Werkstoff besteht.

5.    Plasmabrenner nach Anspruch 4, dadurch g e k e n n z e i c h n e t , daß der zweite Rohrabschnitt (40) mit einem Schutzmantelbereich (41) versehen ist, der einen Teil des ersten Rohrabschnittes (38) überlappt.

6.    Plasmabrenner nach Anspruch 4 oder 5, dadurch g e k e n n z e i c h n e t , daß der zweite Rohrabschnitt (40) der Außenelektrode auf der Innenseite mit einer elektrisch leitenden und thermisch resistenten Schutzschicht versehen ist.

7.    Plasmabrenner nach einem der Ansprüche 4 bis 6, dadurch g e k e n n z e i c h n e t , daß der zweite Rohrabschnitt (83) mit einem aus Bornitrid bestehenden Außenrohr (84) versehen ist, welches auf den zweiten Rohrabschnitt aufgeschraubt ist.

8.    Plasmabrenner nach einem der vorhergehenden Ansprüche, dadurch g e k e n n z e i c h n e t , daß der zweite Rohrabschnitt (40, 83) mit einem Innengewinde versehen ist und auf den ersten Rohrabschnitt (38, 81) aufgeschraubt ist.

9.    Plasmabrenner nach einem der vorhergehenden Ansprüche, dadurch g e k e n n z e i c h n e t , daß die Zentralelektrode (31) zumindest im lichtbogenaktiven Endbereich (34, 79) aus graphitischem Werkstoff besteht und über eine Zapfen-Schachtverbindung mit dem übrigen Zentralelektrodenteil verbunden ist.

10.    Plasmabrenner nach Anspruch 9, dadurch g e k e n n z e i c h n e t , daß der übrige Zentralelektrodenteil mit einer isolierenden Beschichtung versehen ist.

11.    Plasmabrenner nach Anspruch 9 oder 10, dadurch g e k e n n z e i c h n e t , daß der übrige Zentralelektrodenteil (77) aus elektrisch leitfähigem Metall besteht und mit einer Kühlung (80) versehen ist.

12.    Plasmabrenner nach Anspruch 9 oder 10, dadurch g e k e n n z e i c h n e t , daß der übrige Zentralelektrodenteil aus graphitischen, über Zapfen-Schachtverbindungen zusammengefügten Elektrodenteilen (35, 36) besteht.

13.    Plasmabrenner nach einem der Ansprüche 1 bis 8, dadurch g e k e n n z e i c h n e t , daß die gesamte Zentralelektrode (77, 89) aus elektrisch leitfähigem Metall besteht und mit einer Kühlung versehen ist.

14.    Plasmabrenner nach einem der vorhergehenden Ansprüche, dadurch g e k e n n z e i c h n e t , daß die Zentralelektrode (31) als Anode mit dem Pluspol und die rohrförmige Außenelektrode (30) als Kathode mit dem Minuspol einer Gleichstrom-Versorgungsquelle (20) verbunden ist.

15.    Plasmabrenner nach einem der vorhergehenden
Ansprüche, dadurch  g e k e n n z e i c h n e t ,
daß die Kühlung des ersten Rohrabschnittes der Außenelektrode und gegebenenfalls der Zentralelektrode
oder Teilen davon durch ein Kühlsystem mit Hilfe von
Flüssigkeit oder Wärmerohren (Heat Pipes) erfolgt.

16.    Plasmabrenner nach Anspruch 15,
dadurch  g e k e n n z e i c h n e t ,  daß das Kühlsystem einen Kühlmediumgeber (21) aufweist, der hinsichtlich der Temperatur des Kühlmediums und/oder der
Durchflußleistung durch eine Kühlmedium-Regelstufe
(23) geregelt ist.

17.    Plasmabrenner nach Anspruch 16,
dadurch  g e k e n n z e i c h n e t ,  daß die Kühl-
medium-Regelstufe mit einem thermoelektrischen Wandler (22) verbunden ist, der im jeweiligen gekühlten
Ringkammerbereich der rohrförmigen Außenelektrode und
gegebenenfalls der Zentralelektrode vorgesehen ist,
um den Kühlmedienfluß zu steuern.

18.    Plasmabrenner nach einem der vorhergehenden
Ansprüche, dadurch  g e k e n n z e i c h n e t ,
daß die Zentralelektrode (77') mit einem Längskanal
(85) für ein Zusatzmedium, insbesondere für ein reduzierendes bzw. inertes bzw. leicht oxidierendes Gas
versehen ist, das durch mindestens eine Austrittsöffnung (86, 87) über den durch den zweiten Abschnitt
(83') der Außenelektrode und den zugeordneten Zentralelektrodenabschnitt (89) begrenzten Zwischenraum
nach außen gelangt.

19. Plasmabrenner nach einem der Ansprüche 1 bis 18 für einen Kupolofen zum Metallschmelzen, der einen oberen Beschickungsschachtraum, einen unteren Brenner und Schmelzenaufnahmeraum und dazwischen einen gekühlten Rost aufweist,
dadurch gekennzeichnet , daß der Plasmabrenner (8 bzw. 9 bzw. 10), der seitlich in den Schmelzenraum (6) ragt, zumindest längs seiner Achse verstellbar ist, derart, daß er zumindest in der Anfangsphase der Einschmelzung der metallischen Beschickung eine erste Position mit außerhalb der Schmelze (7) befindlicher Plasmalanze und in der anschließenden Phase eine zweite Position aufweist, in der der zweite Abschnitt der rohrförmigen Außenelektrode zumindest teilweise in die Schmelze (7) eingetaucht ist.

20. Plasmabrenner nach Anspruch 19,
dadurch gekennzeichnet , daß der Plasmabrenner mit einer Steuer- und Regelvorrichtung (23 bis 28) zur Bewegungssteuerung des Plasmabrenners (8 bzw. 9 bzw. 10) sowie zur Steuerung und Regelung der Stromversorgung (20), des Medienflusses und/oder der Kühlung in Verbindung steht.

21. Plasmabrenner nach Anspruch 1,
dadurch gekennzeichnet , daß die Zentralelektrode (31) aus imprägniertem Graphit mit einem Maximalkorn bis 4 mm gebildet ist, der weniger als 20 % Fernkornanteil einer Korngröße unter 1 mm aufweist.

22. Plasmabrenner nach Anspruch 21,
dadurch g e k e n n z e i c h n e t , daß die Zentralelektrode (31) aus Nadelkoksen mit lamellarer Längsstrukturierung unter Verwendung von Mesophosenpech durch Graphitierung hergestellt worden ist.

23. Plasmabrenner nach Anspruch 4,
dadurch g e k e n n z e i c h n e t , daß der zweite Rohrabschnitt (40) aus nicht nachverdichtetem Graphit mit Körnungen bis zu 8 mm Maximalkorn gebildet ist.

24. Plasmabrenner nach Anspruch 23,
dadurch g e k e n n z e i c h n e t , daß der zweite Rohrabschnitt (40) aus Graphit mit einem Körnungsaufbau gebildet ist, der mehr als 50 % des Korns im Bereich von 4 bis 8 mm enthält.

25. Plasmabrenner nach Anspruch 24,
dadurch g e k e n n z e i c h n e t , daß der Graphit zumindest oberflächlich mit metallischen Dämpfen und/oder Flüssigkeiten oder durch Reaktionssintern mit Carbiden unter Entstehung von Verbundwerkstoffen aus Graphit und Metallcarbid reagiert worden ist.

26. Plasmabrenner nach Anspruch 25,
dadurch g e k e n n z e i c h n e t , daß der Verbundwerkstoff einen Zermetwerkstoff darstellt, der unter Graphit/SiC, Graphit/TiC und Graphit/$B_4C$ ausgewählt ist.

27. Plasmabrenner nach Anspruch 26,
dadurch g e k e n n z e i c h n e t , daß die spezifische Dichte des Zermets im Bereich von 2,10 bis 2,70 g/cm$^3$ liegt.

# FIG.1

FIG.2

# FIG.3

FIG.4    0202352

0202352

FIG.5

FIG.6

FIG.7

FIG.8

FIG.9

0202352

FIG.10

0202352

# FIG.11

EUROPÄISCHER RECHERCHENBERICHT

## 0202352

Nummer der Anmeldung

EP 85 10 6247

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | EP-A-0 030 679 (VEB EDELSTAHLWERK 8. MAI 1945 FREITAL) * Auzug; Seite 1, Zeilen 11-16,21-24 * | 1 | H 05 H 1/26 // C 04 B 35/54 |
| Y | US-A-4 059 743 (ESIBIAN et al.) * Spalte 4, Zeilen 30-40; Abbildung 1 * | 1,11, 13 | |
| A | EP-A-0 135 473 (ATS) * Seite 12, Zeilen 11-26; Abbildung 1 * | 9-11 | |
| A,D | EP-A-0 020 845 (SELSKAPET FOR INDUSTRIELL OG TEKNISK FORSKNING VED NORGES TEKNISKE HÖGSKDE) * Anspruch 3 * | 4 | RECHERCHIERTE SACHGEBIETE (Int. Cl.4) |
| A | DE-A-2 555 688 (SIGRI ELEKTROGRAPHIT GmbH) * Seite 2, Zeilen 1-9; Abbildung 1; Anspruch 1 * | 12 | H 05 H H 05 B |
| A | EP-A-0 109 356 (ATS) * Auszug; Seite 4, Zeilen 18-22; Abbildungen 1-3 * | 15 | |

Der vorliegende Recherchenbericht wurde für alle Patentansprüche erstellt.

Recherchenort: DEN HAAG | Abschlußdatum der Recherche: 16-01-1986 | Prüfer: WINKELMAN,A.M.E.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | ELEKTROWÄRME INTERNATIONAL, Band 43, April 1985, Seiten B81-B89, Essen, DE; D.H. ZÖLLNER et al.: "Anforderungen und charakteristische Eigenschaften von Graphitelektroden für moderne Elektrodensysteme" * Seite B83, Spalte 2, Zeile 28 - Seite B84, Spalte 1 Zeile 5 * | 21-25 | |
| A | US-A-3 964 924 (KURZEJA) * Auszug; Ansprüche * | 25 | |
| A | CHEMICAL ABSTRACTS, Band 103, Nr. 4, 29. Juli 1985, Seite 237, Nr. 26257j, Columbus, Ohio, US; & JP - A - 60 16 806 (KOA OIL CO., LTD.) 28-01-1985 | 21-25 | |
| | ----- | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 16-01-1986 | WINKELMAN, A.M.E. |